# EUROPEAN PATENT SPECIFICATION

(11) **EP 4 044 518 B1**
(45) Date of publication and mention of the grant of the patent: **17.09.2025**
(21) Application number: 21157171.6
(22) Date of filing: 15.02.2021
(51) Int. Cl.: H04L 41/022, H04L 41/042, H04L 41/0895, H04L 41/40, H04L 41/0806

(54) **METHOD FOR OPERATING A TELECOMMUNICATIONS NETWORK USING A GENERIC NETWORKING DOMAIN INFRASTRUCTURE TOGETHER WITH A PLURALITY OF SPECIFIC HARDWARE ELEMENTS OR HARDWARE NODES, TELECOMMUNICATIONS NETWORK OR SYSTEM, HARDWARE CONTROL ENTITY OR FUNCTIONALITY AND/OR HARDWARE CONTROLLER ENTITY OR FUNCTIONALITY, PROGRAM AND COMPUTER-READABLE MEDIUM**
VERFAHREN ZUM BETRIEB EINES TELEKOMMUNIKATIONSNETZWERKS UNTER VERWENDUNG EINER GENERISCHEN NETZWERKDOMÄNENINFRASTRUKTUR ZUSAMMEN MIT EINER VIELZAHL VON SPEZIFISCHEN HARDWARE-ELEMENTEN ODER HARDWARE-KNOTEN, TELEKOMMUNIKATIONSNETZWERK ODER -SYSTEM, HARDWARE-STEUERUNGSEINHEIT ODER -FUNKTIONALITÄT UND/ODER HARDWARE-STEUERGERÄTEEINHEIT ODER -FUNKTIONALITÄT, PROGRAMM UND COMPUTERLESBARES MEDIUM
PROCÉDÉ DE FONCTIONNEMENT D'UN RÉSEAU DE TÉLÉCOMMUNICATIONS À L'AIDE D'UNE INFRASTRUCTURE DE DOMAINE DE RÉSEAUTAGE GÉNÉRIQUE AVEC UNE PLURALITÉ D'ÉLÉMENTS MATÉRIELS SPÉCIFIQUES OU DE N UDS DE MATÉRIEL, RÉSEAU OU SYSTÈME DE TÉLÉCOMMUNICATIONS, ENTITÉ DE CONTRÔLE MATÉRIEL OU FONCTIONNALITÉ ET/OU ENTITÉ OU FONCTIONNALITÉ DE CONTRÔLEUR MATÉRIEL, PROGRAMME ET SUPPORT LISIBLE PAR ORDINATEUR

(43) Date of publication of application: 17.08.2022
(73) Proprietor: Deutsche Telekom AG, 53113 Bonn (DE)
(72) Inventor: HOFMANN, Jörg, 64823 Groß-Umstadt (DE); STEGER, Martin, 6020 Innsbruck (AT)
(74) Representative: Schwöbel, Thilo K.

(56) References cited:
- WO-A1-00/51001
- WO-A1-2014/083561
- US-A1- 2016 380 812

## Description

### BACKGROUND

The present invention relates a method for operating a telecommunications network using a generic networking domain infrastructure together with a plurality of
specific hardware elements or hardware nodes, the plurality of specific hardware elements or hardware nodes being connected to the generic networking domain infrastructure via a hardware control entity or functionality.

Furthermore, the present invention relates to a system for being operated or for operating a telecommunications network using a generic networking domain infrastructure together with a plurality of specific hardware elements or hardware nodes, the plurality of specific hardware elements or hardware nodes being connected to the generic networking domain infrastructure via a hardware control entity or functionality.

Additionally, the present invention relates to a hardware control entity or functionality as part of a system according to the present invention.

Furthermore, the present invention relates to a program and/or to a computer-readable medium for operating a telecommunications network using a generic networking domain infrastructure together with a plurality of specific hardware elements or hardware nodes according to the inventive method.

In conventionally known telecommunications networks, telecommunication operators typically have their processes and implementations built in a way, that the function of a network element in a topology and the hardware implementing that function or that topology are considered the same (due to the hardware implementing the function), i.e. the (operational) function of a hardware component within the telecommunications network is associated or identified with the considered hardware component itself.

Furthermore, it is known - especially regarding large scale telecommunications operators - to employ or to use different types of hardware from different vendors, especially in order to avoid a so-called "vendor lock-in". This means that regarding the same type of hardware functionality (or at least for at least partly overlapping ranges of hardware functionalities), it needs to be assured that the telecommunications network and/or its infrastructure is made compatible to be used or to be operated with different types or kinds of hardware elements or hardware nodes, resulting in the need to adapt the telecommunications network to vendor- and/or technology-specific processes.

However, this typically results in significant complexity not only in view of operating the telecommunications network, but - even more so - when facing the challenge to implement disruptive changes within the telecommunications network (e.g. introducing new network functions with a new topology, disaggregating network functions, and the like).

In the context of integrating heterogenous hardware resources WO 2014/083561 A1 describes telecommunication network nodes that can be operated using different protocols, in order to facilitate replacement of an existing management system with an SDN-based one. WO 00/51001 A1 describes management of heterogeneous telecommunications networks that include network elements of different types, such as radios and fiber optic devices, made by different manufacturers. US 2016/0380812 A1 describes a hardware controller that serves as an intermediary between third-party devices and central controllers in a central control plane cluster.

### SUMMARY

An object of the present invention is to provide an effective and cost effective solution for operating a telecommunications network using a generic networking domain infrastructure together with a plurality of specific hardware elements or hardware nodes such that a generic interface is able to be used with regard to the generic networking domain infrastructure. A further object of the present invention is to provide a corresponding system, as well as a corresponding hardware control entity or functionality, and a corresponding program and computer-readable medium.

The object of the present invention is achieved by a method according to claim 1.

It is thereby advantageously possible according to the present invention that a comparatively easy implementation of additional hardware is possible, while still fulfilling existing functions. Especially, it is advantageously possible to provide for an increased robustness in the operation of the telecommunications network without processual drawbacks to existing implementations even though the network topology is changed, even fundamentally. According to the present invention, it is advantageously possible that the hardware control entity or functionality, or each one of the hardware controller entities or functionalities, hereinafter also called hardware controller, only deals or deal with the technical aspects of network functions and not with topology. To be able according to the present invention to comparatively easily implement or introduce additional (i.e. new) hardware to the telecommunications network especially stems from the fact that adding or introducing new hardware (i.e. especially new kinds or types of hardware elements or hardware nodes) requires either only changes to an existing hardware controller (or hardware controller entities or functionalities) or the introduction of a new (type of) hardware controller (or hardware controller entities or functionalities).

Conventionally, in order to integrate new or changed hardware and/or new hardware from new vendors (i.e. new types of such hardware), a telecommunication operator would usually integrate the vendor's element management system into their process domain. Hence, the software stack that manages or controls such hardware is provided by the vendor of the hardware, e.g. in the form of an element management system. Such element management systems are typically targeted to abstract specifics of a vendor's hardware. This approach has the following drawbacks:
-- For a given type of hardware, the telecommunication operator is bound to the vendor (i.e. it is "locked-in") - resulting in changing (e.g. for commercial reasons) always imposes a completely new process integration, due to implementing the new element management system provided by the new vendor;
-- To change the managing software or the element management system (e.g. due to commercial reasons or functional weaknesses) in case the corresponding hardware is already deployed (typically many thousand times in access networks) is operationally a comparatively risky task - in fact usually not possible, hence, typically resulting in using only one element management system for one type of hardware within the telecommunications network;
-- If a telecommunication operator wants to introduce hardware of a new vendor, a new integration project with all aspects of Implementing required functions in both the network and the process domain has to be conducted for, .e.g., the operation support and readiness (OS&R, i.e. the installation of the hardware), the fulfillment (FF, i.e. bringing the services to the network), service usage (SU, i.e. bringing the services in showtime), assurance (ASR, i.e. resolve incidents & problems), and billing.

In contrast, according to the present invention, the hardware is controlled (i.e. typically involving a control plane and/or a management plane) by a hardware control entity or functionality and/or by means of individual hardware controller entities or functionalities, also called hardware controllers (or HW-C). Such a hardware controller is typically realized by means of a software stack (such as, e.g., a set of microservices) that
-- translates incoming messages or requests (i.e. from the "outside" to (or towards) the hardware considered, such as, e.g, "IF_Comp_CTRL"-messages or requests ("interface component control" messages or requests) and/or "IF_Comp_MGMT"-messages or requests("interface component management"-messages or requests)) to hardware-specific commands/configuration, i.e. to commands or configuration corresponding to hardware-specific commands and/or configuration (according to the specific hardware-specific interface) and/or
-- normalizes outgoing messages or requests or data or events (i.e. received, by the hardware controller, from the considered hardware (element or component), and being directed to the "outside") to the supported schematized formats (e.g. logs, telemetry data, events according to the generic interface of the generic networking domain infrastructure ("IF_Comp_EVENTS", i.e. "interface component events", and "IF_Comp_DataStreams", i.e. "interface component datastreams").

According to the present invention, the hardware controller furthermore offers a generic interface (according to the generic networking domain infrastructure) to configure the considered hardware controller ("IF_Comp_CONF", "interface component configuration").

Hence, by means of the approach according to the present invention, it is advantageously possible that the hardware control entity or functionality (or each of a first and/or at least a second hardware controller entity or functionality) provides a generic interface towards the generic networking domain infrastructure and a hardware-specific interface towards the respective specific hardware element or hardware node (of the plurality of specific hardware elements or hardware nodes).

This means that according to the present invention, regarding a specific (such as a first or second) hardware element or hardware node having a specific hardware-specific interface, the method comprises the following steps:
-- in a first step, the hardware control entity or functionality (or the respective first or second hardware controller entity or functionality) receives, from the generic networking 35 domain infrastructure (typically the point of delivery bus controller entity or functionality), at least one incoming request according to the at least one generic interface, and transmits, to the specific hardware element or hardware node (e.g. the first or second hardware element or hardware node), at least one corresponding hardware-specific command and/or configuration according to the specific hardware-specific interface, and/or
-- in a second step, the hardware control entity or functionality (or the respective first or second hardware controller entity or functionality) receives, from the specific hardware element or hardware node (e.g. the first or second hardware element or hardware node), at least one hardware-specific event and/or piece of data according to the specific hardware-specific interface, and transmits, to the generic networking domain 10 infrastructure (typically the point of delivery bus controller entity or functionality), at least one corresponding outgoing event and/or piece of data according to the at least one generic interface.

According to the present invention, typically both steps are performed in an event-based manner, i.e. in case that the transmission of a message is required in one or the other direction (i.e. to or from the hardware element or hardware node); hence, the first and second step might be performed simultaneously or sequentially in either order or sequence.

According to the present invention the hardware control entity or functionality comprises or is provided by means of at least a first hardware controller entity or functionality, and a second hardware controller entity or functionality, the first hardware controller entity or functionality being related to a first specific hardware element or hardware node having a first hardware-specific interface, and the second hardware controller entity or functionality being related to a second specific hardware element or hardware node having a second hardware-specific interface,
wherein both the first and second hardware controller entity or functionality receive, from the generic networking domain infrastructure, respective incoming requests according to the at least one generic interface, and transmit, to the first or second specific hardware element or hardware node, respectively, corresponding hardware-specific commands and/or configurations according to the respective specific hardware-specific interfaces, and/or
wherein both the first and second hardware controller entity or functionality receive, from the first and second specific hardware element or hardware node, respectively, hardware-specific events and/or pieces of data according to the first and second hardware-specific interfaces, and transmits, to the generic networking domain infrastructure, corresponding outgoing events and/or pieces of data according to the at least one generic interface.

It is thereby advantageously possible according to the present invention that different kinds of hardware elements or hardware nodes are able to be connected to or integrated in the telecommunications network in a generic manner such as to be able to use the generic interface of the generic networking domain infrastructure, and to wrap, by means of the corresponding hardware control entity or functionality or hardware controller entities or functionalities, the different specific interface and peculiarities of the different types of hardware elements or hardware nodes involved or used.

According to the present invention, it is furthermore advantageously possible and preferred that the hardware control entity or functionality and/or the first or second hardware controller entity or functionality furthermore comprise a generic configuration interface, wherein, in a third step, the at least one hardware control entity or functionality and/or the first or second hardware controller entity or functionality is configured by means of configuration messages received from the generic networking domain infrastructure (e.g. where to register for logging data, how to report internal errors of HW-C, allowing to set threshold values for HW-C liveliness monitoring,...)

It is thereby advantageously possible according to the present invention that the hardware control entity or functionality and/or all (especially the first and/or second) hardware controller entities or functionalities are able to be configured using a generic interface.

According to the present invention, it is furthermore advantageously possible and preferred that the telecommunications network comprises a central office point of delivery comprising a point of delivery bus controller entity or functionality, wherein the hardware control entity or functionality and/or the first or second hardware controller entity or functionality communicate with the generic networking domain infrastructure via the point of delivery bus controller entity or functionality.

By means of using the point of delivery bus controller entity or functionality for all hardware controller entities or functionalities, a common approach is possible to be implemented in a comparatively easy manner.

Furthermore, according to the present invention the first specific hardware element or hardware node and the second specific hardware element or hardware node are hardware elements or hardware nodes of different kinds, and the first hardware-specific interface, and the second hardware-specific interface likewise are hardware-specific interfaces of different kinds, wherein the first and second specific hardware element or hardware nodes are hardware elements or hardware nodes being used for providing the same specific task with respect to or within the telecommunications network.

Thereby, it is advantageously possible that - regarding the same specific task to be fulfilled or provided with respect to or within the telecommunications network - it is possible to use different types of hardware elements or hardware nodes, especially from different vendors, and nevertheless to be able to seamlessly integrate or enhance the network's capacity or functionalities by means or introducing a new or different type of hardware element or node, especially without being required to modify other aspects within the telecommunications network, besides the respective hardware controller entity or functionality or entities or functionalities.

Furthermore, the present invention relates to a system according to claim 5.

Still additionally, the present invention relates to a hardware control entity or functionality according to claim 6.

Additionally, the present invention relates to a program and to a computer-readable medium according to claim 7 and 8.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery, and using a generic networking domain infrastructure.
Figure 2 schematically illustrates a typical example of a central office point of delivery or of a generic networking domain infrastructure, as well as its main components together with a plurality of specific hardware elements or hardware nodes, the plurality of specific hardware elements or hardware nodes being connected to the generic networking domain infrastructure via a hardware control entity or functionality.
Figures 3 and 4 schematically illustrate examples of a specific hardware element or hardware node being connected to the generic networking domain infrastructure via a hardware control entity or functionality.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

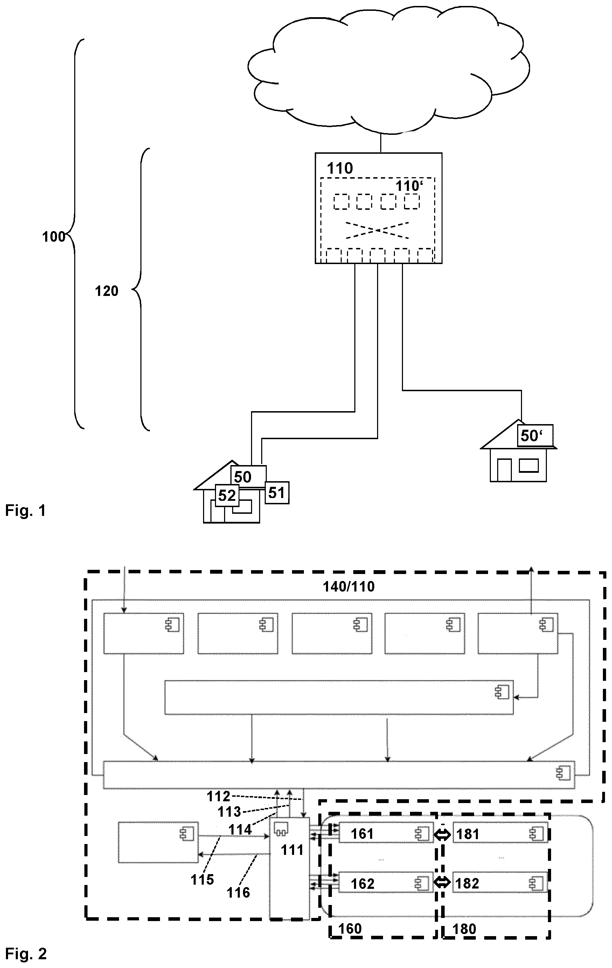

In Figure 1, a telecommunications network 100 according to the present invention is schematically shown, having at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120 being part of the telecommunications network 100. The telecommunications network 100 comprises, especially as part of the broadband access network 120, at least one logical or physical central office point of delivery 110 that is preferably realized within a data center and that is especially handling different access requirements, especially different access possibilities, of the client devices 51, 52 to network functionalities provided by the telecommunications network 100 or via the telecommunications network 100. The client devices 51, 52 are typically connected to the logical or physical central office point of delivery 110 by means of a customer premises equipment device 50, 50' or by means of a customer premises equipment functionality that might be built in the client devices 51, 52. Preferably but not necessarily, the central office point of delivery 110 comprises a switching fabric 110' comprising a plurality of spine network nodes and typically also a plurality of leaf network nodes which are not explicitly represented in Figure 1. A client device 51 is typically connected to the telecommunications network 100 to a line termination node via the customer premises equipment 50 (or home gateway device 50) and a network termination node. The functionality of the customer premises equipment 50 (or home gateway device 50) and the functionality of the network termination node might also be integrated in one device or "box". Even the functionality of the client device 51, the functionality of the customer premises equipment 50 (or home gateway device 50) and the functionality of the network termination node might be integrated in one device or "box".

Figure 2 schematically illustrates a typical example of a central office point of delivery 110 or of a generic networking domain infrastructure 140, as well as its main components together with a plurality of specific hardware elements or hardware nodes 180, the plurality of specific hardware elements or hardware nodes 180 being connected to the generic networking domain infrastructure 140 via a hardware control entity or functionality 160. The central office point of delivery 110 or the generic networking domain infrastructure 140 is typically part of the broadband access network 120 of the telecommunications network 100. An example of the specific hardware elements or hardware nodes 180 are, e.g., line termination nodes. Typically, each of such line termination nodes has one or a plurality of access node ports (not specifically illustrated in Figure 2). In the example represented in Figure 2, two (specific) hardware elements or hardware nodes 180 are exemplarily shown, namely a first specific hardware element or hardware node 181, and a second specific hardware element or hardware node 182. The first specific hardware element or hardware node 181 is connected to the generic networking domain infrastructure 140 (especially to a point of delivery bus controller entity or functionality 111) via a first hardware controller entity or functionality 161, and the second specific hardware element or hardware node 182 is connected to the generic networking domain infrastructure 140 (likewise especially to the point of delivery bus controller entity or functionality 111) via a second hardware controller entity or functionality 162.

The central office point of delivery 110 and/or the generic networking domain infrastructure 140 typically comprise a set of functional components to provide generic network domain functionalities (a.o. an API component, a correlation component, a local Lifecycle Management component, a persistent storage component, a service creation component etc.) that interact bidirectionally via point of delivery bus controller entity or functionality 111 towards/from the hardware control entity or functionality 160 and/or the first and/or second hardware controller entities or functionalities 161/162. The point of delivery bus controller entity or functionality 111 has interfaces with such other components of the generic networking domain infrastructure 140, especially IF_CTRL-Event 116 (interface control event), IF_POD-CTRL 115 (interface central office point of delivery control), IF-Event 114 (interface events), IF_data stream 113 (interface data stream), and IF_Management 112 (interface management).

According to the present invention, the telecommunications network 100 is operated using the generic networking domain infrastructure 140 together with typically a multitude of specific hardware elements or hardware nodes 180. These specific hardware elements or hardware nodes 180 are connected to the generic networking domain infrastructure 140 (especially to the point of delivery bus controller entity or functionality 111) via a hardware control entity or functionality 160 which encapsulates towards the generic networking domain infrastructure 140 all technology-specific aspects of the specific hardware elements or hardware nodes 180 as well as resolves all non-technology-specific aspects of the generic networking domain infrastructure 140 towards the specific hardware elements or hardware nodes 180. Each one of the plurality of such specific hardware elements or hardware nodes 180 is used for providing at least one specific task (such as the task or tasks of an optical line terminal or another network termination node) with respect to or within the telecommunications network 100. The hardware control entity or functionality 160 comprises or is provided by means of a first hardware controller entity or functionality 161, and at least a second hardware controller entity or functionality 162, the first hardware controller entity or functionality 161 being related to a first specific hardware element or hardware node 181 having a first hardware-specific interface 181', and the second hardware controller entity or functionality 162 being related to a second specific hardware element or hardware node 182 having a second hardware-specific interface 182'.

According to a preferred embodiment according to the present invention, all the hardware controller entities or functionalities (i.e. especially the first hardware controller entity or functionality 161 and the second hardware controller entity or functionality 162) are operated or act independently from each other (thereby providing the functionality of the hardware control entity or functionality). However, it is also conceivable to provide the hardware controller entities or functionalities as parts of such a hardware control entity or functionality.

According to the present invention, the hardware is "controlled" (control plane, management plane) by hardware-controllers or hardware controller entities or functionalities 161, 162. Such hardware controllers are typically realized by means of a software stack, typically being realized by means of a set of microservices, that typically
-- translate incoming messages or requests (i.e. from the outside of the considered hardware element or node) to hardware-specific commands/configuration and/or
-- normalize outgoing messages or requests or data or events (i.e. from the considered hardware element or node) to the supported schematized formats (e.g. logs, telemetry data, events according to the generic interface of the generic networking domain infrastructure. Especially according to the present invention, the hardware controller furthermore offers a generic interface 164 (according to the generic networking domain infrastructure 140) to configure the considered hardware controller ("IF_Comp_CONF", "interface component configuration").

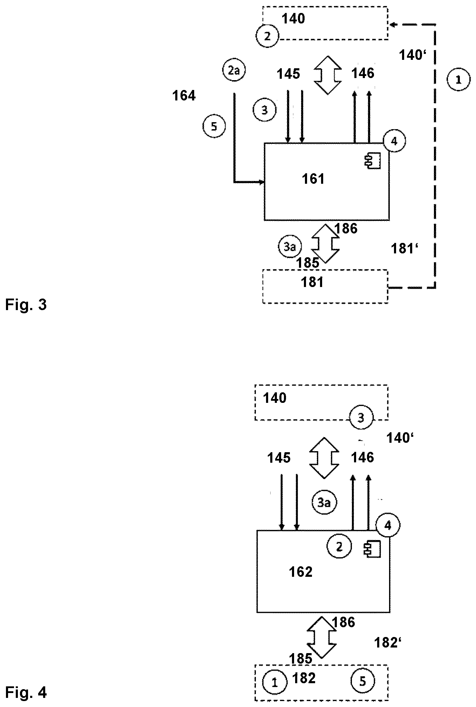

In Figures 3 and 4, examples of a specific (first or second) hardware element or hardware node 181, 182 being connected to the generic networking domain infrastructure 140 via the corresponding (first or second) hardware controller entity or functionality 161, 162 are schematically shown. The hardware control entity or functionality 160 comprises or is provided by means of at least a first hardware controller entity or functionality 161, and a second hardware controller entity or functionality 162. The first hardware controller entity or functionality 161 is related to the first specific hardware element or hardware node 181 (having a first hardware-specific interface 181'), and the second hardware controller entity or functionality 162 is related to the second specific hardware element or hardware node 182 (having a second hardware-specific interface 182'). According to the present invention both the first and second hardware controller entity or functionality 161, 162 receive, from the generic networking domain infrastructure 140, respective incoming requests according to the at least one generic interface 140', and transmit, to the first or second specific hardware element or hardware node 181, 182, respectively, corresponding hardware-specific commands and/or configurations according to the respective specific hardware-specific interfaces 181', 182'. Likewise (and especially simultaneously or sequentially), both the first and second hardware controller entity or functionality 161, 162 receive, from the first and second specific hardware element or hardware node 181, 182, respectively, hardware-specific events and/or pieces of data according to the first and second hardware-specific interfaces 181', 182' and transmit, to the generic networking domain infrastructure 140, corresponding outgoing events and/or pieces of data according to the at least one generic interface 140'.

According to the present invention, the first specific hardware element or hardware node 181 and the second specific hardware element or hardware node 182 are hardware elements or hardware nodes of different kinds, and the first hardware-specific interface 181', and the second hardware-specific interface 182' likewise are hardware-specific interfaces of different kinds. Both the first and second specific hardware element or hardware nodes 181, 182 are hardware elements or hardware nodes being used for providing the same specific task with respect to or within the telecommunications network 100.

Especially according to the present invention, the hardware control entity or functionality 160 and/or the first and/or second hardware controller entity or functionality 161, 162 are typically a collection of a first number (n) of software components that are - collectively - able to integrate a second number (m) of functions or functionalities (of the considered specific hardware element or hardware node) into the generic networking domain infrastructure 140.

According to the present invention, any generic networking domain infrastructure (such as, e,g, an access 4.0 central office point of delivery) provides schematized/generic interfaces (or a generic interface 140') where the corresponding hardware controller entities or functionalities 161, 162 will connect to. Hence, new (types of) hardware elements or hardware nodes are able to be integrated into the domain-20 specific ecosystem (i.e. inti the generic networking domain infrastructure 140) using generic interfaces (or the generic interface 140') instead of adjusting the networking domain 140 to the new (type of) hardware.

In the following two examples involving a number of processing steps related to different operations involving hardware elements or hardware nodes are exemplarily described with reference to figures 3 and 4:
In Figure 3, an auto-installation of a first hardware element or hardware node 181 (e.g. an optical line terminal, OLT) is schematically explained, especially realizing a "zero-touch" provisioning process. In a first processing step (indicated by means or reference sign 1 in Figure 3), the optical line terminal (or first hardware element or hardware node 181) is connected to the telecommunications network 100, resulting in the generic networking domain infrastructure 140 receiving a generic "sign-of-life" information or message. This may be via any technically appropriate protocol (e.g. DHCP, ANCP, RADIUS, even over the corresponding first hardware controller entity or functionality 161 or not) and is only prerequisite trigger for the generic networking domain infrastructure 140 to the following second to fifth processing steps. In the second processing step (indicated by means of reference sign 2 in Figure 3), the networking domain infrastructure 140 identifies the originator (e.g. the serial number, mac address, or other specific information) and identifies the responsible (first) hardware controller entity or functionality 161 for that type of hardware element or hardware node 181 (especially using the generic configuration interface 164 (IF_Comp_CONF), indicated by means of reference sign 2a in Figure 3) to prepare the first hardware controller entity or functionality 161 for the corresponding hardware instance or to direct the outbound interface to the targets in the generic networking domain infrastructure 140. In the third processing step (indicated by means of reference sign 3 in Figure 3), the first hardware controller entity or functionality 161 is instructed via at least one incoming request (145, IF_Comp_CTRL and/or IF_Comp_MGMT) according to the at least one generic interface 140' to setup the networking functions (thereby providing auto-install of the hardware), using the hardware-specific interface 181' of the hardware element or hardware node 181 (indicated by means of reference sign 3a in Figure 3). Such Instructions may be, e.g., "configure VLAN interface on Port 3", "enable a crossconnect between port 2 and NNI 2", "assign a static IP address on the management interface", "create a VRF named XYZ", or the like). In the fourth processing step (indicated by means of reference sign 4 in Figure 3) the corresponding (first) hardware controller entity or functionality 161 discovers the details of the physical hardware 181 and sends these details out in a generic format that suits the interface the generic networking domain 140 provides (146, IF_Comp_EVENTS and/or IF_Comp_DataStreams). After such a successful auto-installation, the generic networking domain infrastructure 140 configures the (first) hardware controller entity or functionality 161 (typically via IF_Comp_CONF 164) to start delivering events, data streams etc., represented by means of reference sign 5 in Figure 3).
In Figure **4****,** a service usage incorporating a service edge function is schematically explained. A first processing step (indicated by means or reference sign 1 in Figure 4) relates to triggering in one of the hardware instances belonging to the networking domain (in Figure 4 especially referring to the second hardware element or hardware node 182), hardware via a technical event (e.g. the detection of a "state change", e.g., a "port-up" event). In a second processing step (indicated by means or reference sign 2 in Figure 4), the second hardware element or hardware node 182 receives the "port-up" information and normalizes it into a generic event (according to the generic interface 141') of the generic networking domain infrastructure 140. In a third processing step (indicated by means or reference sign 3 in Figure 4), the generic networking domain infrastructure 140 analyzes the "port-up", finds context (if existing) and then triggers one or a plurality of configuration steps, e.g., a sequence of configuration steps to one or a plurality of hardware controller entities or functionalities (or, rather, the respective IF_Comp_CTRL, or generic configuration interfaces 164) - and, according to the present invention not needing to know any specifics of the implementing hardware as this is encapsulated by the according hardware controller entities or functionalities (generic command(s) on IF_Comp_CTRL 164 translated to specific commands or command-sequences for the respective specific hardware element or hardware node); "configuration steps" are, e.g., "create a VLAN-based sub-interface on VRF_2002", "create a policer for QoS-Class 2 with bandwith 100Mbit", "Create an AccessControlList with entries XYZ", etc.). In a fourth processing step (indicated by means or reference sign 4 in Figure 4), the corresponding progress and/or success messages or pieces of information are sent-out by the respective (second) hardware controller entity or functionality 162 over IF_Comp_EVENTS 146. In a fifth processing step (indicated by means or reference sign 5 in Figure 4), after all steps are activated on each hardware via the required hardware controller entities or functionalities, the respective user service is active or "Service Usage" is able to start.

## Claims

1. Method for operating a telecommunications network (100) using a generic networking domain infrastructure (140) together with a plurality of specific hardware elements or hardware nodes (180) comprising a first and second specific hardware element or hardware node (181, 182), the plurality of specific hardware elements or hardware nodes (180) being connected to the generic networking domain infrastructure (140) via a hardware control entity or functionality (160), and each one of the plurality of such specific hardware elements or hardware nodes (180) being used for providing at least one specific task with respect to or within the telecommunications network (100),
wherein the hardware control entity or functionality (160) provides at least one generic interface (140') towards the generic networking domain infrastructure (140) and is connected to at least one hardware-specific interface (181', 182') of each one of the plurality of specific hardware elements or hardware nodes (180), wherein the hardware control entity or functionality (160) comprises at least a first hardware controller entity or functionality (161), and a second hardware controller entity or functionality (162), the first hardware controller entity or functionality (161) being related to the first specific hardware element or hardware node (181) having a first hardware-specific interface (181'), and the second hardware controller entity or functionality (162) being related to a second specific hardware element or hardware node (182) having a second hardware-specific interface (182'), wherein the first specific hardware element or hardware node (181) and the second specific hardware element or hardware node (182) are hardware elements or hardware nodes of different kinds, and the first hardware-specific interface (181'), and the second hardware-specific interface (182') likewise are hardware-specific interfaces of different kinds, wherein the first and second specific hardware element or hardware nodes (181, 182) are hardware elements or hardware nodes being used for providing the same specific task with respect to or within the telecommunications network (100), wherein the method is **characterized by** comprising auto-installation of the first specific hardware element or hardware node (181), wherein an auto-installation process for the first specific hardware element or hardware node (181) comprises the following steps:
- - in a first step, the first specific hardware element or hardware node (181) is connected to the telecommunications network (100), resulting in the generic networking domain infrastructure (140) receiving a sign-of-life message,
- - in a second step, the generic networking domain infrastructure (140) identifies the first specific hardware element or hardware node (181) and identifies the first hardware controller entity or functionality (161) as being responsible for the type of hardware of the first specific hardware element or hardware node (181),
- - in a third step, the first hardware controller entity or functionality (161) is instructed by the generic networking domain infrastructure (140) via at least one incoming request (145) according to the at least one generic interface (140') to setup the networking functions using the hardware-specific interface (181') of the first specific hardware element or hardware node (181),
- - in a fourth step, the first hardware controller entity or functionality (161) discovers details of the first hardware element or hardware node (181) and provides these details to the generic networking domain infrastructure (140) using the at least one generic interface (140'),
- - in a fifth step, the generic networking domain infrastructure (140) configures the first hardware controller entity or functionality (161) to start delivering events and/or pieces of data,
wherein the auto-installation process is also performed for the second specific hardware element or hardware node (182),
wherein the method further comprises translation of requests from the generic networking domain infrastructure (140) and normalization of hardware-specific events and/or pieces of data from the first and second specific hardware element or hardware node (181, 182), wherein a translation and normalization process comprises the following steps:
-- in a first step, both the first and second hardware controller entity or functionality (161, 162) receive, from the generic networking domain infrastructure (140), respective incoming requests according to the at least one generic interface (140'), and transmit, to the first or second specific hardware element or hardware node (181, 182), respectively, corresponding hardware-specific commands and/or configurations according to the respective specific hardware-specific interfaces (181', 182'), and
-- in a second step, both the first and second hardware controller entity or functionality (161, 162) receive, from the first and second specific hardware element or hardware node (181, 182), respectively, hardware-specific events and/or pieces of data according to the first and second hardware-specific interfaces (181', 182'), and transmit, to the generic networking domain infrastructure (140), corresponding outgoing events and/or pieces of data according to the at least one generic interface (140').

2. Method according to claim 1, wherein the first or second hardware controller entity or functionality (161, 162) furthermore comprise a generic configuration interface (164), wherein, in a third step, the first or second hardware controller entity or functionality (161, 162) is configured by means of configuration messages received from the generic networking domain infrastructure (140).

3. Method according to one of the preceding claims, wherein the telecommunications network (100) comprises a central office point of delivery (110) comprising a point of delivery bus controller entity or functionality (111), wherein the first or second hardware controller entity or functionality (161, 162) communicate with the generic networking domain infrastructure (140) via the point of delivery bus controller entity or functionality (111).

4. Method according to one of the preceding claims, wherein the respective incoming requests received by the first and second hardware controller entity or functionality (161, 162) in the second step of the translation and normalization process are control plane requests and/or management plane requests.

5. System for operating a telecommunications network (100) using a generic networking domain infrastructure (140) together with a plurality of specific hardware elements or hardware nodes (180) comprising a first and second specific hardware element or hardware node (180, 181), wherein the system comprises the generic networking domain infrastructure (140), the first and second specific hardware element or hardware node (180, 181), and a hardware control entity or functionality (160), wherein the plurality of specific hardware elements or hardware nodes (180) being connected to the generic networking domain infrastructure (140) via a hardware control entity or functionality (160), and each one of the plurality of such specific hardware elements or hardware nodes (180) being used for providing at least one specific task with respect to or within the telecommunications network (100),
wherein the hardware control entity or functionality (160) provides at least one generic interface (140') towards the generic networking domain infrastructure (140) and is connected to at least one hardware-specific interface (181', 182') of each one of the plurality of specific hardware elements or hardware nodes (180), wherein the hardware control entity or functionality (160) comprises at least a first hardware controller entity or functionality (161), and a second hardware controller entity or functionality (162), the first hardware controller entity or functionality (161) being related to a first specific hardware element or hardware node (181) having a first hardware-specific interface (181'), and the second hardware controller entity or functionality (162) being related to a second specific hardware element or hardware node (182) having a second hardware-specific interface (182'), wherein the first specific hardware element or hardware node (181) and the second specific hardware element or hardware node (182) are hardware elements or hardware nodes of different kinds, and the first hardware-specific interface (181'), and the second hardware-specific interface (182') likewise are hardware-specific interfaces of different kinds, wherein the first and second specific hardware element or hardware nodes (181, 182) are hardware elements or hardware nodes being used for providing the same specific task with respect to or within the telecommunications network (100), wherein the system is **characterized by** being adapted to perform an auto-installation process for the first specific hardware element or hardware node (181) such that:
-- upon connecting the first specific hardware element or hardware node (181) to the telecommunications network (100), the generic networking domain infrastructure (140) is adapted to receive a sign-of-life message,
-- the generic networking domain infrastructure (140) is adapted to identify the first specific hardware element or hardware node (181) and to identify the first hardware controller entity or functionality (161) as being responsible for the type of hardware of the first specific hardware element or hardware node (181),
-- the first hardware controller entity or functionality (161) is adapted to be instructed by the generic networking domain infrastructure (140) via at least one incoming request (145) according to the at least one generic interface (140') to setup the networking functions using the first hardware-specific interface (181') of the first specific hardware element or hardware node (181),
-- the first hardware controller entity or functionality (161) is adapted to discover details of the first hardware element or hardware node (181) and to provide these details to the generic networking domain infrastructure (140) using the at least one generic interface (140'),
-- the generic networking domain infrastructure (140) is adapted to configure the first hardware controller entity or functionality (161) to start delivering events and/or pieces of data,
wherein the system is further adapted to perform the auto-installation process for the second specific hardware element or hardware node (182),
wherein the system is further adapted to perform translation of requests from the generic networking domain infrastructure (140) and normalization of hardware-specific events and/or pieces of data from the first and second specific hardware element or hardware node (181, 182) such that:
-- both the first and second hardware controller entity or functionality (161, 162) are adapted to receive, from the generic networking domain infrastructure (140), respective incoming requests according to the at least one generic interface (140'), and to transmit, to the first or second specific hardware element or hardware node (181, 182), respectively, corresponding hardware-specific commands and/or configurations according to the respective specific hardware-specific interfaces (181', 182'), and
-- both the first and second hardware controller entity or functionality (161, 162) are adapted to receive, from the first and second specific hardware element or hardware node (181, 182), respectively, hardware-specific events and/or pieces of data according to the first and second hardware-specific interfaces (181', 182'), and to transmit, to the generic networking domain infrastructure (140), corresponding outgoing events and/or pieces of data according to the at least one generic interface (140').

6. Hardware control entity or functionality (160) with a first hardware controller entity or functionality (161), and a second hardware controller entity or functionality (162), wherein the first and second hardware controller entity or functionality (161, 162) are related to a first and second specific hardware element or hardware node (181, 182), **characterized in that** the hardware control entity or functionality (160) is configured to be used as part of a system according to claim 5, wherein the hardware control entity or functionality (160) is adapted to undergo an auto-installation process for the first specific hardware element or hardware node (181) such that:
-- the first hardware controller entity or functionality (161) is adapted to be instructed by the generic networking domain infrastructure (140) via at least one incoming request (145) according to the at least one generic interface (140') to setup the networking functions using the first hardware-specific interface (181') of the first specific hardware element or hardware node (181),
-- the first hardware controller entity or functionality (161) is adapted to discover details of the first hardware element or hardware node (181) and to provide these details to the generic networking domain infrastructure (140) using the at least one generic interface (140'),
-- the first hardware controller entity or functionality (161) is adapted to be configured by the generic networking domain infrastructure (140) to start delivering events and/or pieces of data,
wherein the hardware control entity or functionality (160) is adapted to undergo the auto-installation process for the second hardware controller entity or functionality (162),
wherein the hardware control entity or functionality (160) is further adapted to perform translation of requests from the generic networking domain infrastructure (140) and normalization of hardware-specific events and/or pieces of data from the first and second specific hardware element or hardware node (181, 182) such that:
-- both the first and second hardware controller entity or functionality (161, 162) are adapted to receive, from the generic networking domain infrastructure (140), respective incoming requests according to the at least one generic interface (140'), and to transmit, to the first or second specific hardware element or hardware node (181, 182), respectively, corresponding hardware-specific commands and/or configurations according to the respective specific hardware-specific interfaces (181', 182'), and
-- both the first and second hardware controller entity or functionality (161, 162) are adapted to receive, from the first and second specific hardware element or hardware node (181, 182), respectively, hardware-specific events and/or pieces of data according to the first and second hardware-specific interfaces (181', 182'), and to transmit, to the generic networking domain infrastructure (140), corresponding outgoing events and/or pieces of data according to the at least one generic interface (140').

7. Computer program comprising a computer readable program code which, when executed in a system comprising a generic networking domain infrastructure (140), a first and second specific hardware element or hardware node (180, 181), and a hardware control entity or functionality (160), causes the system to perform the steps of a method according one of claims 1 to 4.

8. Computer-readable medium comprising instructions which when executed in a system comprising a generic networking domain infrastructure (140), a first and second specific hardware element or hardware node (180, 181), and a hardware control entity or functionality (160), causes the system to perform the steps of a method according one of claims 1 to 4.

## Patentansprüche

1. Verfahren zum Betreiben eines Telekommunikationsnetzwerks (100) unter Verwendung einer generischen Netzwerkdomäneninfrastruktur (140) zusammen mit einer Mehrzahl spezifischer Hardwareelemente oder Hardwareknoten (180), die ein erstes und ein zweites spezifisches Hardwareelement oder Hardwareknoten (181, 182) umfassen, wobei die Mehrzahl spezifischer Hardwareelemente oder Hardwareknoten (180) über eine Hardwaresteuerungseinheit oder -funktionalität (160) mit der generischen Netzwerkdomäneninfrastruktur (140) verbunden ist und jedes der Mehrzahl solcher spezifischer Hardwareelemente oder Hardwareknoten (180) zum Bereitstellen mindestens einer spezifischen Aufgabe in Bezug auf oder innerhalb des Telekommunikationsnetzes (100) verwendet wird,
wobei die Hardwaresteuerungseinheit oder -funktionalität (160) mindestens eine generische Schnittstelle (140') zur generischen Netzwerkdomäneninfrastruktur (140) bereitstellt und mit mindestens einer hardwarespezifischen Schnittstelle (181', 182') jedes der Mehrzahl spezifischer Hardwareelemente oder Hardwareknoten (180) verbunden ist,
wobei die Hardwaresteuerungseinheit oder -funktionalität (160) mindestens eine erste Hardwaresteuerungseinheit oder -funktionalität (161) und eine zweite Hardwaresteuerungseinheit oder -funktionalität (162) umfasst, wobei die erste Hardwaresteuerungseinheit oder -funktionalität (161) mit dem ersten spezifischen Hardwareelement oder Hardwareknoten (181) mit einer ersten hardwarespezifischen Schnittstelle (181') in Beziehung steht, und die zweite Hardwaresteuerungseinheit oder -funktionalität (162) mit einem zweiten spezifischen Hardwareelement oder Hardwareknoten (182) mit einer zweiten hardwarespezifischen Schnittstelle (182') in Beziehung steht, wobei das erste spezifische Hardwareelement oder Hardwareknoten (181) und das zweite spezifische Hardwareelement oder Hardwareknoten (182) Hardwareelemente oder Hardwareknoten unterschiedlicher Art sind, und die erste hardwarespezifische Schnittstelle (181') und die zweite hardwarespezifische Schnittstelle (182') ebenfalls hardwarespezifische Schnittstellen unterschiedlicher Art sind, wobei das erste und das zweite spezifische Hardwareelement oder Hardwareknoten (181, 182) Hardwareelemente oder Hardwareknoten sind, die zur Bereitstellung derselben spezifischen Aufgabe in Bezug auf oder innerhalb des Telekommunikationsnetzes (100) verwendet werden, wobei das Verfahren **dadurch gekennzeichnet ist, dass** es eine automatische Installation des ersten spezifischen Hardwareelements oder Hardwareknotens (181) umfasst, wobei ein Autoinstallationsprozess für das erste spezifische Hardwareelement oder den ersten spezifischen Hardwareknoten (181) die folgenden Schritte umfasst:
-- in einem ersten Schritt wird das erste spezifische Hardwareelement oder Hardwareknoten (181) mit dem Telekommunikationsnetzwerk (100) verbunden, was dazu führt, dass die generische Netzwerkdomäneninfrastruktur (140) eine Lebenszeichenmeldung empfängt,
-- in einem zweiten Schritt identifiziert die generische Netzwerkdomäneninfrastruktur (140) das erste spezifische Hardwareelement oder Hardwareknoten (181) und identifiziert die erste Hardwaresteuerungseinheit oder - funktionalität (161) als für den Hardwaretyp des ersten spezifischen Hardwareelements oder Hardwareknotens (181) verantwortlich,
-- in einem dritten Schritt wird die erste Hardwaresteuerungseinheit oder - funktionalität (161) von der generischen Netzwerkdomäneninfrastruktur (140) über mindestens eine eingehende Anforderung (145) gemäß der mindestens einen generischen Schnittstelle (140') angewiesen, die Netzfunktionen unter Verwendung der hardwarespezifischen Schnittstelle (181') des ersten spezifischen Hardwareelements oder Hardwareknotens (181) einzurichten,
-- in einem vierten Schritt entdeckt die erste Hardwaresteuerungseinheit oder - funktionalität (161) Details des ersten Hardwareelements oder Hardwareknotens (181) und stellt diese Details der generischen Netzwerkdomäneninfrastruktur (140) unter Verwendung der mindestens einen generischen Schnittstelle (140') zur Verfügung,
-- in einem fünften Schritt konfiguriert die generische Netzwerkdomäneninfrastruktur (140) die erste Hardwaresteuerungseinheit oder Funktionalität (161), um mit der Lieferung von Ereignissen und/oder Datenelementen zu beginnen,
wobei der Autoinstallationsprozess auch für das zweite spezifische Hardwareelement oder Hardwareknoten (182) durchgeführt wird,
wobei das Verfahren ferner die Übersetzung von Anfragen von der generischen Netzwerkdomäneninfrastruktur (140) und die Normalisierung von hardwarespezifischen Ereignissen und/oder Datenelementen vom ersten und zweiten spezifischen Hardwareelement oder Hardwareknoten (181, 182) umfasst, wobei ein Übersetzungs- und Normalisierungsprozess die folgenden Schritte umfasst:
-- in einem ersten Schritt empfangen sowohl die erste als auch die zweite Hardwaresteuerungseinheit oder -funktionalität (161, 162) von der generischen Netzwerkdomäneninfrastruktur (140) jeweilige eingehende Anfragen gemäß der mindestens einen generischen Schnittstelle (140'), und senden an das erste oder zweite spezifische Hardwareelement oder Hardwareknoten (181, 182) jeweils entsprechende hardwarespezifische Befehle und/oder Konfigurationen gemäß den jeweiligen spezifischen hardwarespezifischen Schnittstellen (181', 182'), und
-- in einem zweiten Schritt empfängt sowohl die erste als auch die zweite Hardwaresteuerungseinheit oder -funktionalität (161, 162) von dem ersten bzw. dem zweiten spezifischen Hardwareelement oder Hardwareknoten (181, 182) hardwarespezifische Ereignisse und/oder Datenelemente gemäß der ersten bzw. der zweiten hardwarespezifischen Schnittstelle (181', 182') empfangen, und übermittelt an die generische Netzwerkdomäneninfrastruktur (140) entsprechende ausgehende Ereignisse und/oder Datenelemente gemäß der mindestens einen generischen Schnittstelle (140').

2. Verfahren nach Anspruch 1, wobei die erste oder zweite Hardwaresteuerungseinheit oder -funktionalität (161, 162) ferner eine generische Konfigurationsschnittstelle (164) umfasst, wobei in einem dritten Schritt die erste oder zweite Hardwaresteuerungseinheit oder -funktionalität (161, 162) mittels von der generischen Netzwerkdomäneninfrastruktur (140) empfangener Konfigurationsnachrichten konfiguriert wird.

3. Verfahren nach einem der vorstehenden Ansprüche, wobei das Telekommunikationsnetzwerk (100) einen zentralen Vermittlungsstelle-Übergabepunkt (110) umfasst, der eine Übergabepunkt-Bussteuerungseinheit oder - funktionalität (111) umfasst, wobei die erste oder zweite Hardwaresteuerungseinheit oder -funktionalität (161, 162) mit der generischen Netzwerkdomäneninfrastruktur (140) über die Übergabepunkt-Bussteuerungseinheit oder -funktionalität (111)kommuniziert.

4. Verfahren nach einem der vorstehenden Ansprüche, wobei die jeweiligen eingehenden Anfragen, die von der ersten und zweiten Hardwaresteuerungseinheit oder -funktionalität (161, 162) im zweiten Schritt des Übersetzungs- und Normalisierungsprozesses empfangen werden, Steuerungsebenenanfragen und/oder Verwaltungsebenenanfragen sind.

5. System zum Betreiben eines Telekommunikationsnetzwerks (100) unter Verwendung einer generischen Netzwerkdomäneninfrastruktur (140) zusammen mit einer Mehrzahl spezifischer Hardwareelemente oder Hardwareknoten (180), die ein erstes und ein zweites spezifisches Hardwareelement oder Hardwareknoten (181, 182) umfassen, wobei das System die generische Netzwerkdomäneninfrastruktur (140), das erste und zweite spezifische Hardwareelement oder Hardwareknoten (180, 181) und eine Hardwaresteuerungseinheit oder -funktionalität (160) umfasst, wobei die Mehrzahl spezifischer Hardwareelemente oder Hardwareknoten (180) über eine Hardwaresteuerungseinheit oder -funktionalität (160) mit der generischen Netzwerkdomäneninfrastruktur (140) verbunden ist, und jedes der Mehrzahl solcher spezifischer Hardwareelemente oder Hardwareknoten (180) verwendet wird, um mindestens eine spezifische Aufgabe in Bezug auf oder innerhalb des Telekommunikationsnetzes (100) bereitzustellen,
wobei die Hardwaresteuerungseinheit oder -funktionalität (160) mindestens eine generische Schnittstelle (140') zur generischen Netzwerkdomäneninfrastruktur (140) bereitstellt und mit mindestens einer hardwarespezifischen Schnittstelle (181', 182') jedes der Mehrzahl spezifischer Hardwareelemente oder Hardwareknoten (180) verbunden ist,
wobei die Hardwaresteuerungseinheit oder -funktionalität (160) mindestens eine erste Hardwaresteuerungseinheit oder -funktionalität (161) und eine zweite Hardwaresteuerungseinheit oder -funktionalität (162) umfasst, wobei die erste Hardwaresteuerungseinheit oder -funktionalität (161) mit dem ersten spezifischen Hardwareelement oder Hardwareknoten (181) mit einer ersten hardwarespezifischen Schnittstelle (181') in Beziehung steht, und die zweite Hardwaresteuerungseinheit oder -funktionalität (162) mit einem zweiten spezifischen Hardwareelement oder Hardwareknoten (182) mit einer zweiten hardwarespezifischen Schnittstelle (182') in Beziehung steht, wobei das erste spezifische Hardwareelement oder Hardwareknoten (181) und das zweite spezifische Hardwareelement oder Hardwareknoten (182) Hardwareelemente oder Hardwareknoten unterschiedlicher Art sind, und die erste hardwarespezifische Schnittstelle (181') und die zweite hardwarespezifische Schnittstelle (182') ebenfalls hardwarespezifische Schnittstellen unterschiedlicher Art sind, wobei das erste und das zweite spezifische Hardwareelement oder Hardwareknoten (181, 182) Hardwareelemente oder Hardwareknoten sind, die verwendet werden, um die gleiche spezifische Aufgabe in Bezug auf oder innerhalb des Telekommunikationsnetzes (100) bereitzustellen, wobei das System **dadurch gekennzeichnet ist, dass** es dazu ausgelegt ist, einen Autoinstallationsprozess für das erste spezifische Hardwareelement oder den ersten spezifischen Hardwareknoten (181) so durchzuführen, dass:
-- beim Verbinden des ersten spezifischen Hardwareelements oder Hardwareknotens (181) mit dem Telekommunikationsnetzwerk (100) die generische Netzwerkdomäneninfrastruktur (140) dazu ausgelegt ist, eine Lebenszeichenmeldung zu empfangen,
-- die generische Netzwerkdomäneninfrastruktur (140) dazu ausgelegt ist, das erste spezifische Hardwareelement oder Hardwareknoten (181) zu identifizieren und die erste Hardwaresteuerungseinheit oder -funktionalität (161) als für den Hardwaretyp des ersten spezifischen Hardwareelements oder Hardwareknotens (181) verantwortlich zu identifizieren,
-- die erste Hardwaresteuerungseinheit oder -funktionalität (161) ist so ausgelegt, dass sie von der generischen Netzwerkdomäneninfrastruktur (140) über mindestens eine eingehende Anforderung (145) gemäß der mindestens einen generischen Schnittstelle (140') angewiesen wird, die Netzfunktionen unter Verwendung der ersten hardwarespezifischen Schnittstelle (181') des ersten spezifischen Hardwareelements oder Hardwareknotens (181) einzurichten,
-- die erste Hardwaresteuerungseinheit oder -funktionalität (161) dazu ausgelegt ist, Details des ersten Hardwareelements oder Hardwareknotens (181) zu ermitteln und diese Details der generischen Netzwerkdomäneninfrastruktur (140) unter Verwendung der mindestens einen generischen Schnittstelle (140') bereitzustellen,
-- die generische Netzwerkdomäneninfrastruktur (140) dazu ausgelegt ist, die erste Hardwaresteuerungseinheit oder -funktionalität (161) so zu konfigurieren, dass sie mit der Lieferung von Ereignissen und/oder Datenelementen beginnt,
wobei das System ferner dazu ausgelegt ist, den automatischen Installationsprozess für das zweite spezifische Hardwareelement oder Hardwareknoten (182) durchzuführen,
wobei das System ferner dazu ausgelegt ist, eine Übersetzung von Anfragen von der generischen Netzwerkdomäneninfrastruktur (140) und eine Normalisierung von hardwarespezifischen Ereignissen und/oder Datenelementen vom ersten und zweiten spezifischen Hardwareelement oder Hardwareknoten (181, 182) durchzuführen, so dass:
-- sowohl die erste als auch die zweite Hardwaresteuerungseinheit oder - funktionalität (161, 162) dazu ausgelegt sind, von der generischen Netzwerkdomäneninfrastruktur (140) jeweilige eingehende Anfragen gemäß der mindestens einen generischen Schnittstelle (140') zu empfangen und an das erste bzw. zweite spezifische Hardwareelement oder Hardwareknoten (181, 182) entsprechende hardwarespezifische Befehle und/oder Konfigurationen gemäß den jeweiligen spezifischen hardwarespezifischen Schnittstellen (181', 182') zu übertragen, und
-- sowohl die erste als auch die zweite Hardwaresteuerungseinheit oder - funktionalität (161, 162) dazu ausgelegt sind, von dem ersten bzw. dem zweiten spezifischen Hardwareelement oder Hardwareknoten (181, 182) hardwarespezifische Ereignisse und/oder Datenelemente gemäß der ersten bzw. der zweiten hardwarespezifischen Schnittstelle (181', 182') zu empfangen, und um entsprechende ausgehende Ereignisse und/oder Datenelemente gemäß der mindestens einen generischen Schnittstelle (140') an die generische Netzwerkdomäneninfrastruktur (140) zu übertragen.

6. Hardwaresteuerungseinheit oder -funktionalität (160) mit einer ersten Hardwaresteuerungseinheit oder -funktionalität (161) und einer zweiten Hardwaresteuerungseinheit oder -funktionalität (162), wobei die erste und die zweite Hardwaresteuerungseinheit oder -funktionalität (161, 162) mit einem ersten und einem zweiten spezifischen Hardwareelement oder Hardwareknoten (181, 182) in Beziehung stehen, **dadurch gekennzeichnet, dass** die Hardwaresteuerungseinheit oder -funktionalität (160) so konfiguriert ist, dass sie als Teil eines Systems gemäß Anspruch 5 verwendet wird, wobei die Hardwaresteuerungseinheit oder -funktionalität (160) so angepasst ist, dass sie einen Autoinstallationsprozess für das erste spezifische Hardwareelement oder Hardwareknoten (181) durchläuft, so dass:
-- die erste Hardwaresteuerungseinheit oder -funktionalität (161) dazu ausgelegt ist, von der generischen Netzwerkdomäneninfrastruktur (140) über mindestens eine eingehende Anforderung (145) gemäß der mindestens einen generischen Schnittstelle (140') angewiesen zu werden, die Netzfunktionen unter Verwendung der ersten hardwarespezifischen Schnittstelle (181') des ersten spezifischen Hardwareelements oder Hardwareknotens (181) einzurichten,
-- die erste Hardwaresteuerungseinheit oder -funktionalität (161) dazu ausgelegt ist, Details des ersten Hardwareelements oder Hardwareknotens (181) zu ermitteln und diese Details der generischen Netzwerkdomäneninfrastruktur (140) unter Verwendung der mindestens einen generischen Schnittstelle (140') bereitzustellen,
-- die erste Hardware-Steuerungseinheit oder -funktionalität (161) ist so angepasst, dass sie von der generischen Netzwerkdomäneninfrastruktur (140) konfiguriert werden kann, um mit der Bereitstellung von Ereignissen und/oder Datenelementen zu beginnen,
wobei die Hardware-Steuerungseinheit oder -funktionalität (160) so angepasst ist, dass sie den Autoinstallationsprozess für die zweite Hardware-Steuerungseinheit oder -funktionalität (162) durchläuft,
wobei die Hardwaresteuerungseinheit oder -funktionalität (160) ferner dazu ausgelegt ist, eine Übersetzung von Anfragen von der generischen Netzwerkdomäneninfrastruktur (140) und eine Normalisierung von hardwarespezifischen Ereignissen und/oder Datenelementen vom ersten und zweiten spezifischen Hardwareelement oder Hardwareknoten (181, 182) durchzuführen, so dass:
-- sowohl die erste als auch die zweite Hardwaresteuerungseinheit oder - funktionalität (161, 162) dazu ausgelegt sind, von der generischen Netzwerkdomäneninfrastruktur (140) jeweilige eingehende Anfragen gemäß der mindestens einen generischen Schnittstelle (140') zu empfangen, und zum Senden entsprechender hardwarespezifischer Befehle und/oder Konfigurationen gemäß den jeweiligen spezifischen hardwarespezifischen Schnittstellen (181', 182') an das erste bzw. zweite spezifische Hardwareelement oder den ersten bzw. zweiten spezifischen Hardwareknoten (181, 182) und
-- sowohl die erste als auch die zweite Hardwaresteuerungseinheit oder - funktionalität (161, 162) dazu ausgelegt sind, von dem ersten bzw. dem zweiten spezifischen Hardwareelement oder Hardwareknoten (181, 182) hardwarespezifische Ereignisse und/oder Datenelemente gemäß der ersten bzw. der zweiten hardwarespezifischen Schnittstelle (181', 182') zu empfangen, und um entsprechende ausgehende Ereignisse und/oder Datenelemente gemäß der mindestens einen generischen Schnittstelle (140') an die generische Netzwerkdomäneninfrastruktur (140) zu übertragen.

7. Computerprogramm, das einen computerlesbaren Programmcode umfasst, der, wenn er in einem System ausgeführt wird, das eine generische Netzwerkdomäneninfrastruktur (140), ein erstes und ein zweites spezifisches Hardwareelement oder einen ersten und einen zweiten spezifischen Hardwareknoten (180, 181) und eine Hardwaresteuerungseinheit oder -funktionalität (160) umfasst, das System veranlasst, die Schritte eines Verfahrens gemäß einem der Ansprüche 1 bis 4 auszuführen.

8. Computerlesbares Medium, das Anweisungen umfasst, die, wenn sie in einem System ausgeführt werden, das eine generische Netzwerkdomäneninfrastruktur (140), ein erstes und ein zweites spezifisches Hardwareelement oder Hardwareknoten (180, 181) und eine Hardwaresteuerungseinheit oder -funktionalität (160) umfasst, das System veranlassen, die Schritte eines Verfahrens gemäß einem der Ansprüche 1 bis 4 auszuführen.

## Revendications

1. Procédé pour faire fonctionner un réseau de télécommunications (100) utilisant une infrastructure de domaine de réseau générique (140) conjointement avec une pluralité d'éléments ou nœuds matériels spécifiques (180) comprenant un premier et un deuxième élément ou nœud matériel spécifique (181, 182), la pluralité d'éléments ou nœuds matériels spécifiques (180) étant connectée à l'infrastructure de domaine de réseau générique (140) via une entité ou fonctionnalité de contrôle matérielle (160), et chacun de la pluralité de tels éléments ou nœuds matériels spécifiques (180) étant utilisé pour fournir au moins une tâche spécifique par rapport à ou dans le réseau de télécommunications (100),
dans lequel l'entité ou fonctionnalité de contrôle matérielle (160) fournit au moins une interface générique (140') vers l'infrastructure de domaine de réseau générique (140) et est connectée à au moins une interface spécifique matériel (181', 182') de chacun de la pluralité d'éléments ou nœuds matériels spécifiques (180),
dans lequel l'entité ou la fonctionnalité de contrôle matérielle (160) comprend au moins une première entité ou fonctionnalité de contrôleur matériel (161) et une deuxième entité ou fonctionnalité de contrôleur matériel (162), la première entité ou fonctionnalité de contrôleur matériel (161) étant liée au premier élément ou nœud matériel spécifique (181) ayant une première interface spécifique matériel (181'), et la deuxième entité ou fonctionnalité de contrôleur matériel (162) étant liée à un deuxième élément ou nœud matériel spécifique (182) ayant une deuxième interface spécifique au matériel (182'), dans laquelle le premier élément ou nœud matériel spécifique (181) et le deuxième élément ou nœud matériel spécifique (182) sont des éléments ou nœuds matériels de types différents, et la première interface spécifique au matériel (181'), et la deuxième interface spécifique matériel (182') sont également des interfaces spécifiques matériel de types différents, dans lequel le premier et le deuxième élément ou nœud matériel spécifique (181, 182) sont des éléments ou nœuds matériels utilisés pour fournir la même tâche spécifique par rapport au réseau de télécommunications (100) ou à l'intérieur de celui-ci, dans lequel le procédé est **caractérisé en ce qu'**il comprend l'auto-installation du premier élément ou nœud matériel spécifique (181), dans lequel un processus d'auto-installation pour le premier élément ou nœud matériel spécifique (181) comprend les étapes suivantes :
-- dans une première étape, le premier élément ou nœud matériel spécifique (181) est connecté au réseau de télécommunications (100), ce qui a pour résultat que l'infrastructure de domaine de réseau générique (140) reçoit un message de signe de vie,
-- dans une deuxième étape, l'infrastructure de domaine de réseau générique (140) identifie le premier élément ou nœud matériel spécifique (181) et identifie la première entité ou fonctionnalité de contrôleur matériel (161) comme étant responsable du type de matériel du premier élément ou nœud matériel spécifique (181),
-- dans une troisième étape, la première entité ou fonctionnalité de contrôleur matériel (161) reçoit de l'infrastructure de domaine de réseau générique (140), via au moins une demande entrante (145) selon au moins une interface générique (140'), l'instruction de configurer les fonctions de mise en réseau en utilisant l'interface spécifique matériel (181') du premier élément ou nœud matériel spécifique (181),
-- dans une quatrième étape, la première entité ou fonctionnalité de contrôleur matériel (161) découvre des détails du premier élément ou nœud matériel (181) et fournit ces détails à l'infrastructure de domaine de réseau générique (140) en utilisant la au moins une interface générique (140'),
-- dans une cinquième étape, l'infrastructure de domaine de réseau générique (140) configure la première entité ou fonctionnalité de contrôleur matériel (161) pour commencer à fournir des événements et/ou des éléments de données,
dans laquelle le processus d'auto-installation est également effectué pour le deuxième élément ou nœud matériel spécifique (182),
dans lequel le procédé comprend en outre la traduction de requêtes provenant de l'infrastructure de domaine de réseau générique (140) et la normalisation d'événements et/ou d'éléments de données spécifiques au matériel provenant des premier et deuxième éléments ou nœuds matériels spécifiques (181, 182), dans lequel un processus de traduction et de normalisation comprend les étapes suivantes
-- dans une première étape, les première et deuxième entités ou fonctionnalités de contrôleur matériel (161, 162) reçoivent, de l'infrastructure de domaine de réseau générique (140), des requêtes entrantes respectives conformément à la au moins une interface générique (140'), et transmettent, au premier ou au deuxième élément ou nœud matériel spécifique (181, 182), respectivement, des commandes et/ou des configurations spécifiques au matériel correspondantes selon les interfaces spécifiques au matériel respectives (181', 182'), et
-- dans une deuxième étape, les première et deuxième entités ou fonctionnalités de contrôleur matériel (161, 162) reçoivent, respectivement, du premier et du deuxième élément ou nœud matériel spécifique (181, 182), des événements et/ou des éléments de données spécifiques au matériel conformément aux première et deuxième interfaces spécifiques au matériel (181', 182'), et transmettent, à l'infrastructure de domaine de réseau générique (140), des événements et/ou des éléments de données sortants correspondants conformément à la au moins une interface générique (140').

2. Procédé selon la revendication 1, dans lequel la première ou la deuxième entité ou fonctionnalité de contrôleur matériel (161, 162) comprend en outre une interface de configuration générique (164), dans lequel, dans une troisième étape, la première ou la deuxième entité ou fonctionnalité de contrôleur matériel (161, 162) est configurée au moyen de messages de configuration reçus de l'infrastructure de domaine de réseau générique (140).

3. Procédé selon l'une des revendications précédentes, dans lequel le réseau de télécommunications (100) comprend un point de livraison central (110) comprenant une entité ou fonctionnalité de contrôleur de bus (111) de point de livraison central, dans lequel la première ou la deuxième entité ou fonctionnalité de contrôleur matériel (161, 162) communique avec l'infrastructure de domaine de réseau générique (140) via l'entité ou fonctionnalité de contrôleur de bus (111) de point de livraison central.

4. Procédé selon l'une des revendications précédentes, dans lequel les requêtes entrantes respectives reçues par la première et la deuxième entité ou fonctionnalité de contrôleur matériel (161, 162) dans la deuxième étape du processus de traduction et de normalisation sont des requêtes de plan de contrôle et/ou des requêtes de plan de gestion.

5. Système pour faire fonctionner un réseau de télécommunications (100) utilisant une infrastructure de domaine de réseau générique (140) conjointement avec une pluralité d'éléments ou nœuds matériels spécifiques (180) comprenant un premier et un deuxième élément ou nœud matériel spécifique (180, 181), dans lequel le système comprend l'infrastructure de domaine de réseau générique (140), les premier et deuxième éléments ou nœuds matériels spécifiques (180, 181), et une entité ou fonctionnalité de contrôle matérielle (160), dans lequel la pluralité d'éléments ou de nœuds matériels spécifiques (180) est connectée à l'infrastructure de domaine de réseau générique (140) via une entité ou fonctionnalité de contrôle matérielle (160), et chacun de la pluralité de tels éléments ou nœuds matériels spécifiques (180) étant utilisé pour fournir au moins une tâche spécifique par rapport à ou dans le réseau de télécommunications (100),
dans lequel l'entité ou fonctionnalité de contrôle matérielle (160) fournit au moins une interface générique (140') vers l'infrastructure de domaine de réseau générique (140) et est connectée à au moins une interface spécifique matériel (181', 182') de chacun de la pluralité d'éléments ou nœuds matériels spécifiques (180),
dans lequel l'entité ou la fonctionnalité de contrôle matérielle (160) comprend au moins une première entité ou fonctionnalité de contrôleur matériel (161) et une deuxième entité ou fonctionnalité de contrôleur matériel (162), la première entité ou fonctionnalité de contrôleur matériel (161) étant liée au premier élément ou nœud matériel spécifique (181) ayant une première interface spécifique matériel (181'), et la deuxième entité ou fonctionnalité de contrôleur matériel (162) étant liée à un deuxième élément ou nœud matériel spécifique (182) ayant une deuxième interface spécifique au matériel (182'), dans laquelle le premier élément ou nœud matériel spécifique (181) et le deuxième élément ou nœud matériel spécifique (182) sont des éléments ou nœuds matériels de types différents, et la première interface spécifique au matériel (181'), et la deuxième interface spécifique matériel (182') sont également des interfaces spécifiques matériel de types différents, dans lequel le premier et le deuxième élément ou nœud matériel spécifique (181, 182) sont des éléments ou nœuds matériels utilisés pour fournir la même tâche spécifique par rapport au réseau de télécommunications ou à l'intérieur de celui-ci (100), dans lequel le système est **caractérisé en ce qu'**il est adapté pour exécuter un processus d'auto-installation pour le premier élément ou nœud matériel spécifique (181) de telle sorte que :
-- lors de la connexion du premier élément ou nœud matériel spécifique (181) au réseau de télécommunications (100), l'infrastructure de domaine de réseau générique (140) est adaptée pour recevoir un message de signe de vie,
-- l'infrastructure de domaine de réseau générique (140) est adaptée pour identifier le premier élément ou nœud matériel spécifique (181) et pour identifier la première entité ou fonctionnalité de contrôleur matériel (161) comme étant responsable du type de matériel du premier élément ou nœud matériel spécifique (181),
-- la première entité ou fonctionnalité de contrôleur matériel (161) est adaptée pour recevoir des instructions de l'infrastructure de domaine de réseau générique (140) via au moins une demande entrante (145) selon au moins une interface générique (140') pour configurer les fonctions de mise en réseau en utilisant la première interface spécifique matériel (181') du premier élément ou nœud matériel spécifique (181),
-- la première entité ou fonctionnalité de contrôleur matériel (161) est adaptée pour découvrir des détails du premier élément ou nœud matériel (181) et pour fournir ces détails à l'infrastructure de domaine de réseau générique (140) en utilisant la au moins une interface générique (140'),
-- l'infrastructure de domaine de réseau générique (140) est adaptée pour configurer la première entité ou fonctionnalité de contrôleur matériel (161) pour commencer à fournir des événements et/ou des éléments de données,
dans lequel le système est en outre adapté pour exécuter le processus d'auto-installation pour le deuxième élément ou nœud matériel spécifique (182),
dans lequel le système est en outre adapté pour effectuer la traduction de requêtes provenant de l'infrastructure de domaine de réseau générique (140) et la normalisation des événements et/ou éléments de données spécifiques au matériel provenant des premier et deuxième éléments ou nœuds matériels spécifiques (181, 182) de telle sorte que :
-- les première et deuxième entités ou fonctionnalités de contrôleur matériel (161, 162) sont toutes deux adaptées pour recevoir, de l'infrastructure de domaine de réseau générique (140), des requêtes entrantes respectives conformément à la au moins une interface générique (140'), et de transmettre, au premier ou au deuxième élément ou nœud matériel spécifique (181, 182), respectivement, des commandes et/ou des configurations spécifiques au matériel correspondantes selon les interfaces spécifiques au matériel respectives (181', 182'), et
-- les première et deuxième entités ou fonctionnalités de contrôleur matériel (161, 162) sont toutes deux adaptées pour recevoir, respectivement, du premier et du deuxième élément ou nœud matériel spécifique (181, 182), des événements et/ou des éléments de données spécifiques au matériel conformément aux première et deuxième interfaces spécifiques au matériel (181', 182'), et pour transmettre, à l'infrastructure de domaine de réseau générique (140), des événements et/ou des éléments de données sortants correspondants conformément à la au moins une interface générique (140').

6. Entité ou fonctionnalité de contrôle matérielle (160) avec une première entité ou fonctionnalité de contrôleur matériel (161) et une deuxième entité ou fonctionnalité de contrôleur matériel (162), dans laquelle la première et la deuxième entité ou fonctionnalité de contrôleur matériel (161, 162) sont liées à un premier et un deuxième élément ou nœud matériel spécifique (181, 182), **caractérisée en ce que** l'entité ou fonctionnalité de contrôle matérielle (160) est configurée pour être utilisée en tant que partie d'un système selon la revendication 5, dans laquelle l'entité ou fonctionnalité de contrôle matérielle (160) est adaptée pour subir un processus d'auto-installation pour le premier élément ou nœud matériel spécifique (181) de telle sorte que :
-- la première entité ou fonctionnalité de contrôleur matériel (161) est adaptée pour recevoir des instructions de l'infrastructure de domaine de réseau générique (140) via au moins une demande entrante (145) selon au moins une interface générique (140') pour configurer les fonctions de mise en réseau en utilisant la première interface spécifique matériel (181') du premier élément ou nœud matériel spécifique (181),
-- la première entité ou fonctionnalité de contrôleur matériel (161) est adaptée pour découvrir des détails du premier élément ou nœud matériel (181) et pour fournir ces détails à l'infrastructure de domaine de réseau générique (140) en utilisant la au moins une interface générique (140'),
-- la première entité ou fonctionnalité de contrôleur matériel (161) est adaptée pour être configurée par l'infrastructure de domaine de réseau générique (140) afin de commencer à fournir des événements et/ou des éléments de données,
dans laquelle l'entité ou fonctionnalité de contrôle matérielle (160) est adaptée pour subir le processus d'auto-installation pour la deuxième entité ou fonctionnalité de contrôleur matériel (162),
dans lequel l'entité ou la fonctionnalité de contrôle matérielle (160) est en outre adaptée pour effectuer la traduction de requêtes provenant de l'infrastructure de domaine de réseau générique (140) et la normalisation des événements et/ou éléments de données spécifiques au matériel provenant des premier et deuxième éléments ou nœuds matériels spécifiques (181, 182) de telle sorte que :
-- les première et deuxième entités ou fonctionnalités de contrôleur matériel (161, 162) sont toutes deux adaptées pour recevoir, de l'infrastructure de domaine de réseau générique (140), des requêtes entrantes respectives conformément à la au moins une interface générique (140'), et de transmettre, au premier ou au deuxième élément ou nœud matériel spécifique (181, 182), respectivement, des commandes et/ou des configurations spécifiques au matériel correspondantes selon les interfaces spécifiques au matériel respectives (181', 182'), et
-- les première et deuxième entités ou fonctionnalités de contrôleur matériel (161, 162) sont toutes deux adaptées pour recevoir, respectivement, du premier et du deuxième élément ou nœud matériel spécifique (181, 182), des événements et/ou des éléments de données spécifiques au matériel conformément aux première et deuxième interfaces spécifiques au matériel (181', 182'), et pour transmettre, à l'infrastructure de domaine de réseau générique (140), des événements et/ou des éléments de données sortants correspondants conformément à la au moins une interface générique (140').

7. Programme informatique comprenant un code de programme lisible par ordinateur qui, lorsqu'il est exécuté dans un système comprenant une infrastructure de domaine de réseau générique (140), un premier et un deuxième élément ou nœud matériel spécifique (180, 181) et une entité ou fonctionnalité de contrôle matérielle (160), amène le système à exécuter les étapes d'un procédé selon l'une des revendications 1 à 4.

8. Support lisible par ordinateur comprenant des instructions qui, lorsqu'elles sont exécutées dans un système comprenant une infrastructure de domaine de réseau générique (140), un premier et un deuxième élément ou nœud matériel spécifique (180, 181) et une entité ou fonctionnalité de contrôle matérielle (160), amène le système à exécuter les étapes d'un procédé selon l'une des revendications 1 à 4.
